(19) Europäisches Patentamt / European Patent Office / Office européen des brevets

(11) **EP 3 203 734 A2**

(12) **EUROPEAN PATENT APPLICATION**

(43) Date of publication:
09.08.2017 Bulletin 2017/32

(51) Int Cl.:
*H04N 17/00* (2006.01)    *H05B 33/08* (2006.01)
*G03B 43/00* (2006.01)

(21) Application number: 17154862.1

(22) Date of filing: 06.02.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 05.02.2016 US 201662291795 P
19.12.2016 US 201615384077

(71) Applicant: **Tektronix, Inc.**
**Beaverton, Oregon 97077-0001 (US)**

(72) Inventor: **Daniel G., BAKER**
**Beaverton, Oregon 97007 (US)**

(74) Representative: **HGF Limited**
**Fountain Precinct**
**Balm Green**
**Sheffield S1 2JA (GB)**

(54) **CAMERA CALIBRATION**

(57) A stop-weighted light reference includes an LED light source and a pulse-generator structured to drive the light source at pre-defined levels. The pre-defeined levels relate to one another on a $\log_2$ scale. The light reference may be used to characterize a non-calibrated camera. A look-up-table (LUT) of output values may be stored in a stand-alone device or in a test and measurement device, such as a waveform monitor. The LUT may correlate a range of input values to a set of output values that are calibrated to be on a $\log_2$ scale. In operation, a camera output may be used as an index to the LUT to cause the calibrated output to be generated.

100

130 LIGHT VALUE SELECTOR — 120 LED DRIVING SIGNAL PULSE GENERATOR — DRIVING SIGNAL 122 — LED 110

**FIG. 1**

EP 3 203 734 A2

## Description

## Cross-reference to related applications

This application claims priority from US provisional application 62/291,795, filed February 5, 2016, entitled HDR CAMERA F-STOP CALIBRATOR, and from US application 15/384,077, filed on December 19, 2016 the contents of both of which are incorporated by reference herein.

## Technical Field

This disclosure relates to calibrating cameras, and particularly to calibrating High Dynamic Range (HDR) video cameras.

## Background

For many years, film cameras have far exceeded the image dynamic range of available video cameras, and have been the preferred image capture medium of movie production. In the past decade, Complementary Metal Oxide Semiconductor (CMOS) and Charge Coupled Device (CCD) digital image technology has improved pixel resolution as well as light sensitivity and useful dynamic range. These new digital technologies are now rapidly replacing film cameras in movie and television production. Digital video cameras are now able to capture over 15-stops of dynamic range. In addition, reduced cost imagers are bringing this High Dynamic Range (HDR) to low-end video production including episodic and streaming video services. Calibrating a digital camera using a paper chart having various levels of darkness is limited to about 9 or 10 stops, which is insufficient for modern cameras.

To utilize the high dynamic range of these cameras on-set, it is often preferred to refer to stops (f-stops or t-stops) when measuring scene and subject lighting, as has been the practice for many years in film production. An Opto-Electric Transfer Function (OETF) of a camera is a function that plots the electrical output of the camera from various light input levels. The OETF may be characterized in terms of stops and displayed on a waveform monitor. The user specifies which camera output format is being used in the signal driving the waveform monitor. Examples of typical OETF's include Sony S-log/2/3, Cannon C-log, Cineon logC, as well as the common BT.709 gamma, which is typically available in all cameras.

Most cameras, however, also have custom adjustments affecting the OETF that can be modified and stored by the user. These adjustments may be manipulated by the user based on artistic evaluation of the pixels without adherence to any particular published OETF. Additionally, the standard OETF of a particular camera may not exactly match the factory-set OETF. Therefore, two problems exist for accurately measuring camera output - users may adjust a camera OETF for artistic reasons, or the factory OETF may not be accurate for all cameras. So, neither existing cameras nor current test equipment include accurate light calibrators to properly characterize and measure the accuracy of the camera OETF, due at least in part to these variations.

Embodiments of the invention address this and other limitations of the prior art.

## Brief Description of the Drawings

FIG. 1 is a block diagram of a stop-calibrated light source according to embodiments of the invention.
FIG. 2 is a block diagram of a testing environment of an HDR camera f-stop calibrator according to embodiments of the invention.
Fig. 3 is a waveform diagram of a camera output when viewing a controlled LED in the testing environment illustrated in Fig. 2.
Fig. 4 is a graph depicting an OETF for a tested camera compared to an ideal output.
Fig. 5 is a $\log_2$ graph depicting measured outputs of a tested camera as well as ideal outputs.
Fig. 6A is a block diagram of a camera calibration system according to embodiments of the invention.
Fig. 6B illustrates an example process of creating a Look-Up-Table of calibration data according to embodiments of the invention.
Fig. 7 is a $\log_2$ graph depicting measured outputs of a tested camera as well as ideal outputs after a calibration according to embodiments of the invention has been performed.
Fig. 8 illustrates example operations that be used to create a Look-Up-Table according to embodiments of the invention.

## Detailed Description

Embodiments of the invention include a light calibrator that can be placed in front of the camera, on any production set, to provide exact calibrated light values to the camera. Then the camera output can be reviewed to see how the camera output aligns to the known input. In one embodiment the calibrated light values differ from one another in $\log_2$ weighted stop values. For instance, the light calibrator may first output full light, then one-half that amount, i.e., one "stop" down, then one-quarter of the full light (two stops), etc. The range of light values calibrated may exceed 14 stops, which spans from camera black sensitivity to full light. Further embodiments of the invention also include a method and apparatus of precisely calibrating a camera output for specified levels of light input. Still further embodiments of the invention provide a computer readable storage medium comprising computer readable instructions that, when read by a computer, cause performance of the calibration method. The computer readable storage medium may be, for example, a USB flash drive, a secure digital (SD) card, an optical disc (such as a compact disc (CD), a digital versatile disc (DVD) or a Blu-ray disc). The computer readable storage medium may be non-transitory.

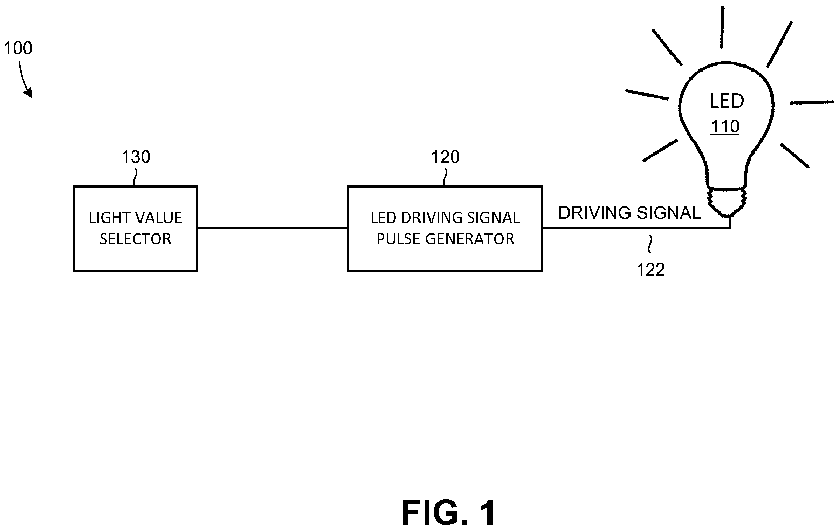

As illustrated in Fig. 1, embodiments of the invention include a stop-calibrated light source 100 created by driving a Light Emitting Diode (LED) 110 by a duty-cycle modulated driving signal 122. A driving signal pulse generator 120 generates the driving signal 122. A user may select a desired light value using a selector 130. Then, based on the user selection, the driving signal pulse generator 120 generates pulses at a particular selected frequency and duty cycle that causes the LED 110 to generate the desired amount of light. The driving signal pulse generator 120 outputs pulses that are discretely selectable and that each correspond to light stopped output by the LED 110. In other words, the user uses the light value selector 130 to choose the light output, measured in stops, from unity. In one embodiment the driving signal 122 provides constant current, but has a duty cycle that is reduced in steps from unity in powers of two (i.e. 1, 1/2, 1/4, etc.) to create a calibrated step change in light output of the LED 110 in 1-stop or fractional-stop increments. This on-off, pulse-current driving signal 122 keeps the on-current value fixed over all stop settings, thereby keeping the instantaneous power and resulting light output for each pulse constant and independent of duty cycle. In this way, the light values are not affected by temperature or differences in LEDs as compared to a multi-LED method or voltage driven duty cycle modulator. Therefore, only the duty cycle affects the average brightness of the LED 110.

In some embodiments, the duty cycle of pulse-current driving signal 122 may be expressed as $I\_duty\_cycle(n) = 2^{-n}$, where n is the dimension-less stop value.

More generally, n is not restricted to integer values, allowing fractional stop changes as well as 1-stop increments. The minimum pulse repetition rate may be set to several multiples of the highest video frame rate expected to allow the imager, e.g., the camera being characterized, to average the light pulse. Further, setting the pulse rate to an odd integer multiple of ½ the frame rate may minimize aliasing of any amplitude variation due to insufficient averaging of the pulse in the imager. For example, a rate of 99 x 29.97 Hz = 2.967 KHz can be used with good results and, the frequency is not critical due to the 99X oversampling.

In operation, a user selects the stop value, n, using the selector 130, which causes the signal pulse generator 120 to generate the driving signal 122 having a duty cycle that corresponds to the selected stop value. In other embodiments the user may select an initial stop value, and then the signal pulse generator 120 automatically cycles through all of the discrete stop values that it is programmed to generate. The sequence of stepping through the pre-set values may be repeated many times and the individual outputs that correspond to the pre-set values may be averaged to enhance calibration accuracy. In some systems there may be up to 14 or 16 discrete stop values, while in other systems 10 or 12 stop values is sufficient. Then, the electrical output from a camera pointed at the LED 110 will correspondingly step its output in a defined relation to the amount of light generated by the LED. The stop values generated by the pulse generator 120 may be generated in ascending or descending values.

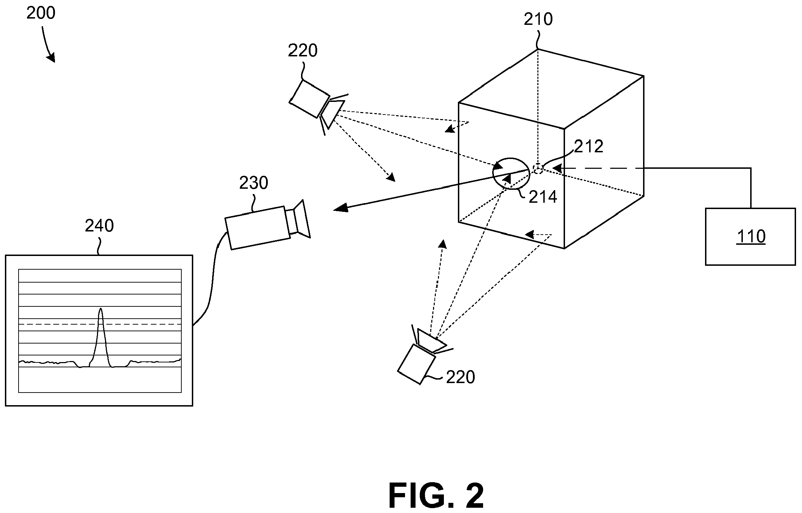

Other aspects of the invention are directed to a calibration system, such as the system 200 illustrated in Fig. 2. The calibration system 200 includes a light source, such as the LED 110 (Fig. 1) placed in a container 210, such as a cube shaped box (as illustrated in Fig. 2), hollow sphere, or other shape that minimizes light escaping the container. The LED 110 is placed in the container 210, for example in a corner 212 opposite a hole 214 in one face of the container 210, as shown in Fig 2. The LED 110 may be driven by the circuit illustrated in Fig. 1, which is structured to generate light having predetermined values related to one another.

The container 210 containing the LED 110 has a non-reflective interior, which may be black in color, and acts as a light trap to create a black surround adjacent to the LED 110 as seen by a camera 230 that is desired to be calibrated. This black surround created by the container 210 creates a black reference level in a video signal output of the camera 230. The black surround is created by trapping and absorbing ambient lighting, such as the set-lighting 220, including any ambient sunlight, which is normally reflected back to the camera 230 when not using a light trap. The black surround from the container 210 is used to determine a black level of the output of the camera 230 relative to the brightest parts of the scene captured by the camera, as well as the calibrated LED light source 110.

The LED light source 110 may be a fast LED, which is capable of creating low light levels from a very narrow pulse width generated by the signal pulse generator 120 (Fig. 1). For example, generating a driving signal 122 to drive the LED 110 at, for example, -10 to -11 stops means that the driving signal 122 has a very short duty cycle, which exhibits as a series of very narrow pulse widths of the driving signal. It is possible that such dim light generated by the LED 110 may not be able to be fully integrated by the camera sensor within the camera 230. To further increase the stop testing range, the camera lens of the camera 230 can be stopped down or a Neutral-Density (ND) filter of several stops may be applied. This way, cameras can be tested over the full dynamic range of the imager by combining the results with and without stopping the lens down, if necessary.

The output of the camera 230 may be displayed on a screen 240 of, for example, a waveform monitor set to capture the electrical output of the camera 230, as described in more detail below.

As a first step in calibrating a camera 230, a table of output values is created, with a measured output value for every discrete light value, i.e., stop value, being measured.

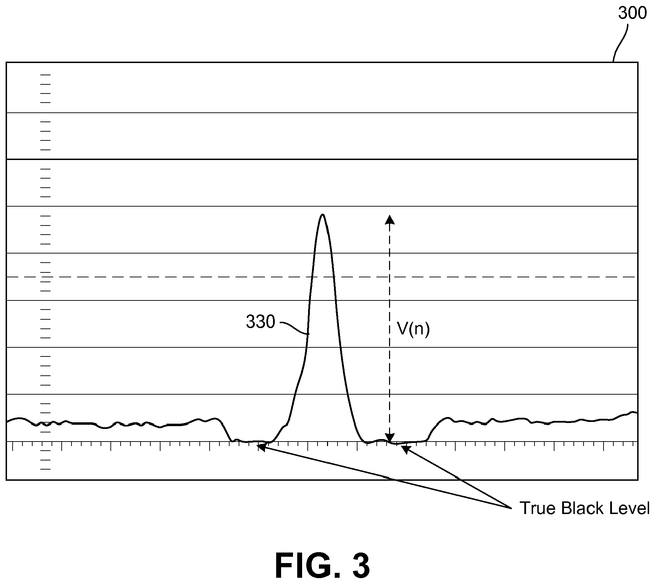

Fig. 3 illustrates a graticule 300 of a waveform monitor (not illustrated) for measuring output values of the camera 230 when measuring various levels of light in the container 210 of Fig. 2. A waveform 330 has a peak located in between two "true-black" levels. The true-black levels correspond to the light measured by the camera of the hole 214 of the container 210, while the peak level corresponds to the level of light measured by the camera at the brightest portion of the LED 110 driven at a particular stop value, as described above. When the driving signal 122 driving the LED 110 is stopped down, as described above, the waveform 330 will correspondingly decrease. The black levels of the hole 214 will remain roughly the same for every stop-value measurement. In this manner, the output of the camera 230 may be measured for each of the stop values driven by the driving signal 122. Measured values from each of the stop values may be used to generate a table, as illustrated below as Table 1.

Table 1

| n | V(n) |
|---|---|
| 0 | 695 |
| -1 | 480 |
| -2 | 338 |
| -3 | 222 |
| -4 | 144 |
| -5 | 88 |
| -6 | 60 |
| -7 | 38 |
| -8 | 26 |
| -9 | 12 |
| -10 | 1 |

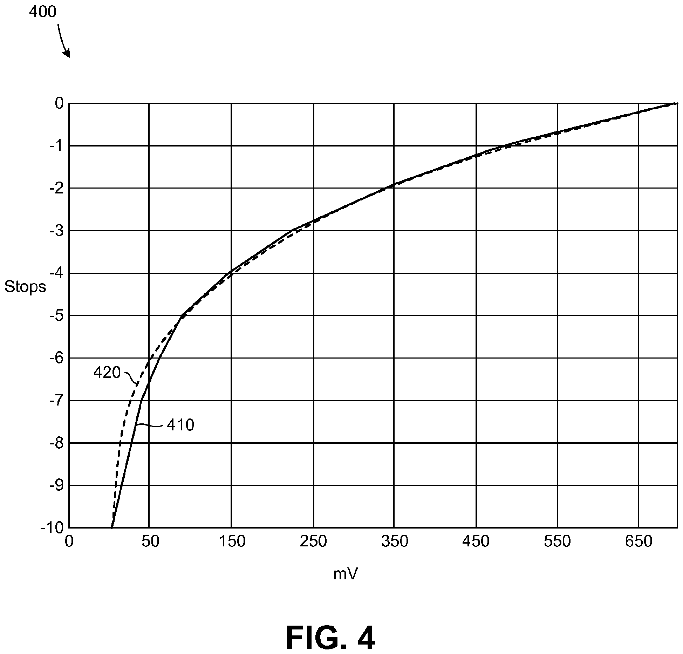

With reference to Table 1, 11 stops (n), labeled 0 - -10 are illustrated in the first column. The second column holds measured electrical voltages, in mV, measured from the output of a camera 230 on, for example, the graticule 300 of Fig. 3. For example, with 0 stops, the camera 230 outputs 695 mV, while, when the LED 110 (Fig. 1) was driven at a -5-stop value, i.e., stopped down five stops from the full output, the output of camera 230 measures 88 mV. These values are graphed in Fig. 4, with the measured values indicated by the solid line 410, while the ideal values according to the defined OETF values for the camera are graphed as the dotted line 420. In this case the measured output values from the camera 230 do not identically match the ideal values.

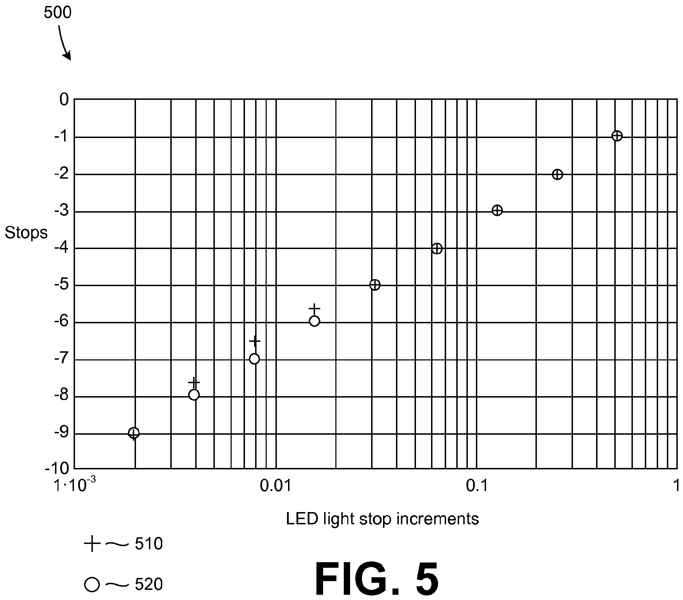

Fig. 5 illustrates this concept in a different form of graph. In particular, Fig. 5 is graphed on a $\log_2$ scale. The graph 500 illustrates the measured values for each stop level with a cross 510, and illustrates the ideal values for each stop with an open circle 520. Note that, for measured stopped values -1 through -5, the measured value 510 generally corresponds to the ideal value 520. This is also illustrated in Fig. 4 in that, for values above -5 stops, the solid line of measured values 410 aligns closely with the dotted line of ideal values 420. Returning back to Fig. 5, for stop values -6 - -9, the measured OETF response 510 from the camera 230 varies somewhat from the ideal values 520 for each.

In many instances, this discrepancy of measured OETF values from ideal values is undesirable. Embodiments of the invention may be used to compensate for the non-ideal performance of the camera 230, as described below.

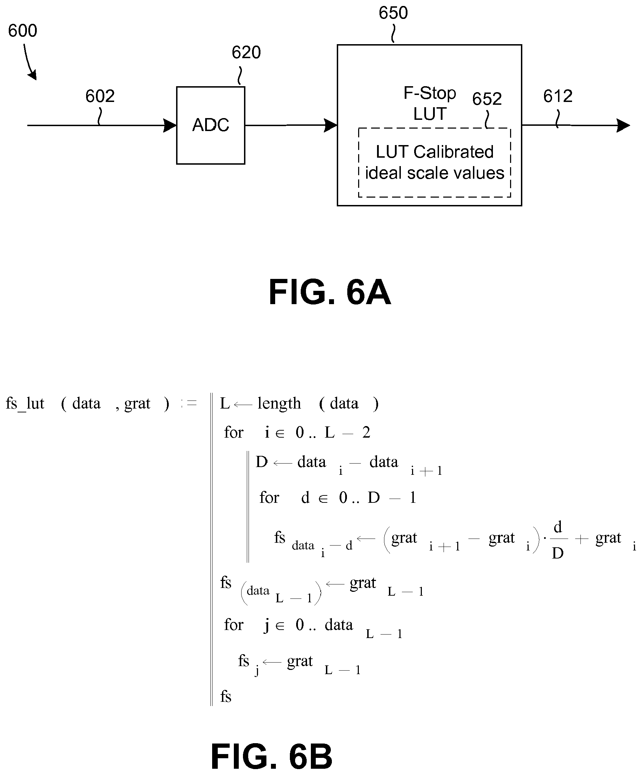

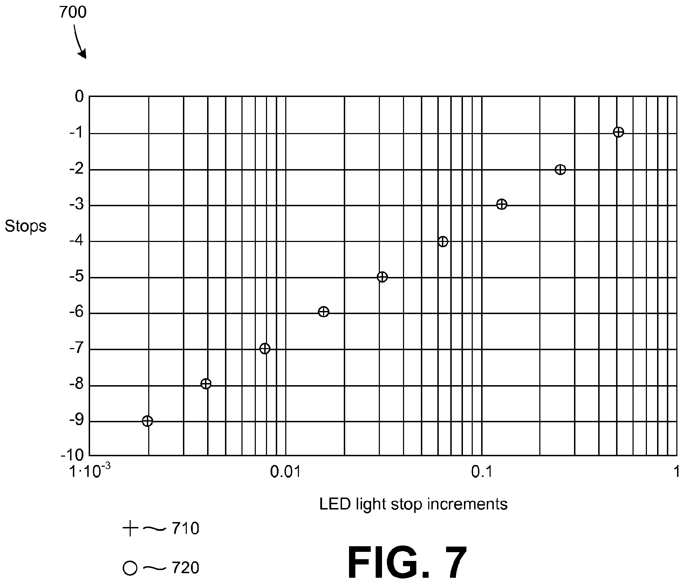

As illustrated in Fig. 6A, a calibrator 600 receives an electrical signal output 602 of the camera 230 (Fig. 2) and generates a $\log_2$ weighted scale output 612 that an ideal camera would have produced, so that the light viewed by the camera 630 may be accurately measured. The output 612 may be fed to a waveform monitor to generate the f-stop scaled waveform display, such as that illustrated in Fig. 7.

In more detail, the calibrator 600 includes an Analog to Digital Converter (ADC) 620, which receives the analog voltage value from the output of the camera 230 and converts it to a data value that is used to index a Look-Up Table (LUT) 650. Then, based on the particular value that the LUT 650 receives, the LUT selects and produces the desired output. In some embodiments the ADC 620 illustrated in Fig. 6A is integrated in the camera 230 itself, and not a separate component outside the camera. Additionally, in other embodiments the LUT 650 may also be integrated within the camera, and thus, the camera itself may be calibrated by properly populating the LUT. In yet other embodiments the calibrator 600 illustrated in Fig. 6A, or some of its component parts, such as the LUT 650, are integrated within a test and measurement instrument, such as a waveform monitor. In such an embodiment, a camera 230 may couple directly to a waveform monitor to make camera signal measurements. In yet other embodiments, the calibrator 600, or components thereof, may be stand-alone components, and not embodied in either a camera nor a waveform monitor or other instrument.

The LUT 650 is populated with values that allow a correspondence to be made from the digitized camera value from the ADC 620 to the desired output. The LUT 650 may be generated in several different ways. In one embodiment the ideal scaled values are determined from several variables. Once such variable is the number of stops that were selected by the user using the light value selector 130. The user may specify a 10-stop system, 12-stop system 14 stop system, etc. Another variable is the bit-depth of the ADC 620. For instance, the ADC 620 may have a 12-bit output and generate output values between 0 and 4095. Then a scale is generated corresponding to the data values of the output curve of the camera 230 as illustrated in Fig. 4. An example method of producing the scale values to populate the LUT 650 is illustrated in Fig. 6B. In essence, for each stop value ultimately assigned, a scaled range of data values is assigned using the process illustrated in Fig. 6B that directly translates numerical value ranges to a stop value. Finally, the particular index values for the LUT 650 are generated based on corresponding electrical values that the camera 230 produces. For instance, to scale "n" stops of a lighting system that has a maximum of an approximately 700 mV signal, when the light is not stopped, into 12-bit values, the LUT values may be generated according to Equation (1):

## Equation 1:

$$\text{data}_n := \text{Floor}\left[\frac{V_n}{700} \cdot (940 - 64) \cdot 4 + 0.5\right] + 64 \cdot 4$$

The final values determined by Equation 1 and stored in LUT 650 for the particularly described system including a 700 mV maximum signal output from the camera 230, 10 non-zero stops, and a 12-bit ADC may appear as illustrated in Table 2:

Table 2

| max value | stop |
|-----------|------|
| 3735 | 0 |
| 2659 | -1 |
| 1948 | -2 |
| 1367 | -3 |
| 977 | -4 |
| 697 | -5 |
| 556 | -6 |
| 446 | -7 |
| 386 | -8 |
| 316 | -9 |
| 261 | -10 |

With reference back to Fig. 6A and to Table 2, in operation the camera 230 produces an electrical value based on the amount of light being captured by the camera and according to the OETF of the camera. Then this value is translated by the ADC 620 to a value ranging between 0 and 4095, i.e., a 12-bit value. Next, the value generated by the ADC 620 is used as an index value to the calibrated ideal values stored in the LUT 650, which, for this example, may be assumed to be the same as represented in Table 2. Finally, the 12-bit value is indexed against the stored stop values and a particular output value, from 0 to -10 stops, is selected and output by the LUT 650 as the light measured by the camera 230, as calibrated by the calibrator 600.

In one particular example, if the output of the ADC 620 is "550", then the LUT 650 outputs -6 stops. In other words, the camera 230 is sensing light approximately -6 stops down from full light. If the output of the ADC were instead "1920", then the LUT 650 would output -2 stops. Such a relationship makes sense because a higher 12-bit number from the ADC 620 means there was a higher electrical input from the camera 230. The camera 230 generates a higher electrical output when there is more light, and the final output of -2 stops means that the camera 230 is sensing more light than when the output was -6 stops.

Fig. 7 illustrates a graph 700 of output values generated by the calibrator 600 according to embodiments of the invention. Note that, compared to the graph of Fig. 5, the graph 700 includes ideal values generated by a camera 230 that has been calibrated by the process described above. The calibrated outputs may be an automated sequence when the light value selector 130 (Fig. 1) is structured to automatically step through its pre-set values, as described above. Additionally, the sequence of stepping through the pre-set values may be repeated many times and the individual outputs averaged to enhance calibration accuracy.

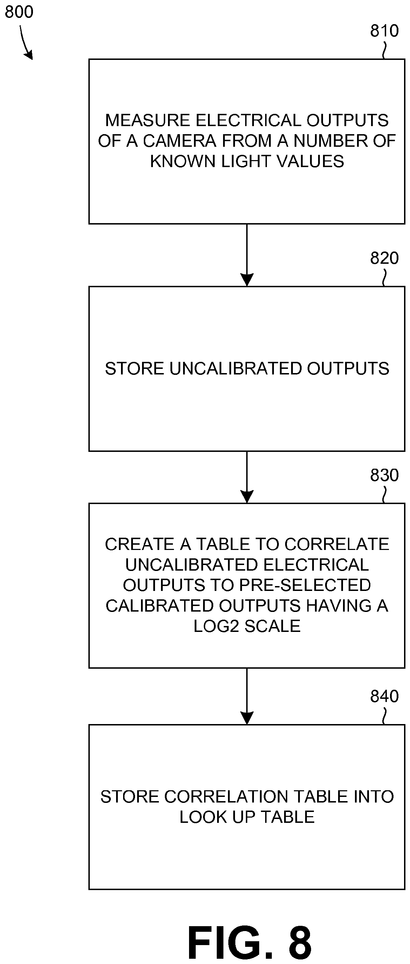

Fig. 8 illustrates a flow 800 of example operations that be used to create the LUT 650 illustrated in Fig. 6A according to embodiments of the invention. An operation 810 includes measuring a plurality of uncalibrated electrical outputs of a camera that respectively correspond to a plurality of known amounts of light. An example of this was described above with reference to Table 1. In embodiments the uncalibrated outputs from the camera are stored in a table or memory generated by pointing the camera at a known amount of light. For instance, with reference to Fig. 2 above, the camera may be pointed at the LED 110 that was driven with various levels of light that vary by stops, or $\log_2$ values from one another. Next, in an operation 820, the uncalibrated output values are stored, for example in a table or memory. Operation 830 creates a LUT. For example, operation 830 may first determine how many number of independent calibrated outputs will be in the correlation table, then, for every of the number of independent calibrated outputs, associate a range of uncalibrated electrical output levels. An example equation that may perform this function is illustrated as Equation 1 above. The table may appear as described above with reference to Table 2. Next, the range of uncalibrated electrical output levels and their associated calibrated outputs are stored in a LUT in operation 840. This LUT may be stored in computer memory (e.g., Read Only Memory (ROM) or in Random Access Memory (RAM) or in another storage medium. The LUT may exist in a test and measurement device, such as a waveform monitor, for example.

EXAMPLES

Illustrative examples of the technologies disclosed herein are provided below. An embodiment of the technologies may include any one or more, and any combination of, the examples described below.

Example 1 includes a stop-weighted light reference, comprising: a Light Emitting Diode (LED) light source; a selector device configured to be operated by a user to cause a predefined amount of light to be output by the LED; and a pulse-generator having a predefined number of pre-set modes, and each mode having a pulse width different than any other mode, the pulse-width generator structured to accept a user-selected value from the selector device and to provide to the LED light source a light driving output in one of the pre-set modes that corresponds to the user selected value.

Example 2 includes the stop-weighted light reference of Example 1, or any other example light reference described herein, in which the pulse-width of a particular pre-set mode is approximately one-half the pulse width of another of the pre-set modes.

Example 3 includes the stop-weighted light reference of Examples 1-2, or any other example light reference described herein, in which one of the pre-set modes of the pulse-generator includes a full-width pulse.

Example 4 includes the stop-weighted light reference of Example 3, or any other example light reference described herein, in which other modes of the pulse generator include a one-half width pulse, a one-quarter width pulse, and a one-eighth width pulse.

Example 5 includes the stop-weighted light reference of Examples 1-4, or any other example light reference described herein, in which the selector device is structured to automatically cause the pulse-generator to sequentially step through the number of pre-set modes.

Example 6 includes the stop-weighted light reference of Examples 1-5, or any other example light reference described herein, in which the pulse-generator is structured to drive each mode with constant electrical current, and in which each of the pre-set modes has a different pulse width.

Example 7 includes the stop-weighted light reference of Examples 1-6, or any other example light reference described herein, in which the pulse-generator includes at least 10 pre-set modes.

Example 8 includes the stop-weighted light reference of Examples 1-7, or any other example light reference described herein, in which an individual one of the pre-set modes is repeated multiple times at a particular frequency.

Example 9 includes the stop-weighted light reference of Example 8, or any other example light reference described herein, in which the frequency is selected based on a light integration rate of the camera.

Example 10 includes a camera calibration system for a camera having an Optical-Electrical Transfer Function, the calibration system comprising: a three-dimensional structure including an LED light located within an interior of the structure, and including a hole through which the camera may view the LED light; and a pulse-generator having a predefined number of pre-set modes, and each mode having a pulse width different than other modes, the pulse-width generator structured to provide to the LED light a light driving output in one of the pre-set modes that corresponds to the user selected value.

Example 11 includes a camera calibration system of Example 10, or any other example camera calibration system described herein, further comprising: a selector device configured to be operated by a user to cause a predefined amount of light to be output by the LED, and in which the pulse-width generator is structured to accept a user-selected value from the selector device and to provide to the LED light source the light driving output.

Example 12 includes a camera calibration system of Examples 10-11, or any other example camera calibration system described herein, in which the pulse-width of a particular pre-set mode is exactly one-half the pulse width of another of the pre-set modes.

Example 13 includes a camera calibration system of Examples 10-12, or any other example camera calibration system described herein, in which one of the pre-set modes of the pulse-generator includes a full-width pulse.

Example 14 includes a camera calibration system of Example 13, or any other example camera calibration system described herein, in which other modes of the pulse generator include a one-half width pulse, a one-quarter width pulse, and a one-eighth width pulse.

Example 15 includes a method of calibrating a camera output, comprising: measuring a plurality of uncalibrated electrical outputs of the camera that respectively correspond to a plurality of known amounts of light; storing the plurality of uncalibrated electrical outputs of the camera; and, from the plurality of uncalibrated electrical outputs of the camera, creating a correlation table that respectively correlates the plurality of uncalibrated electrical outputs of the camera to pre-selected calibrated outputs, the pre-selected calibrated outputs being related to one another on a $\log_2$ scale.

Example 16 includes the method of calibrating a camera output of Example 15, or any other example method of calibrating a camera output described herein, in which creating a correlation table comprises:

determining how many number of independent calibrated outputs will be in the correlation table; and, for every of the number of independent calibrated outputs, associating a range of uncalibrated electrical output levels.

Example 17 includes the method of calibrating a camera output of Examples 15-16, or any other example method of calibrating a camera output described herein, further comprising storing the range of uncalibrated electrical output levels and their associated independent calibrated output in a Look-Up-Table.

Example 18 includes a test and measurement apparatus, comprising* an input structured to accept a camera output for a camera that has an uncalibrated Optical-Electrical Transfer Function; a first converter structured to accept the camera output and generate a numerical equivalent thereof; a second converter structured to accept one of the numerical equivalents from the first converter and to generate an output that is one of a plurality of calibrated outputs.

Example 19 includes the test and measurement apparatus of Example 18, or any other example test and measurement apparatus described herein, in which the plurality of calibrated outputs comprises a set of values related to one another by a $\log_2$ function.

Example 20 includes the test and measurement apparatus of Examples 18 -19, or any other example test and measurement apparatus described herein, in which the camera output is generated by pointing the camera at one of a known plurality of light values.

The previously described versions of the disclosed subject matter have many advantages that were either described or would be apparent to a person of ordinary skill. Even so, all of these advantages or features are not required in all versions of the disclosed apparatus, systems, or methods.

Additionally, this written description makes reference to particular features. It is to be understood that the disclosure in this specification includes all possible combinations of those particular features. For example, where a particular feature is disclosed in the context of a particular aspect, that feature can also be used, to the extent possible, in the context of other aspects.

Also, when reference is made in this application to a method having two or more defined steps or operations, the defined steps or operations can be carried out in any order or simultaneously, unless the context excludes those possibilities.

Although specific embodiments of the invention have been illustrated and described for purposes if illustration, it will be understood that various modifications may be made without departing from the scope of the invention.

**Claims**

1. A stop-weighted light reference, comprising:

   a Light Emitting Diode (LED) light source; a selector device configured to be operated by a user to cause a predefined amount of light to be output by the LED; and a pulse-generator having a predefined number of pre-set modes, and each mode having a pulse width different than any other mode, the pulse-width generator structured to accept a user-selected value from the selector device and to provide to the LED light source a light driving output in one of the pre-set modes that corresponds to the user selected value.

2. The stop-weighted light reference according to claim 1 in which the pulse-width of a particular pre-set mode is approximately one-half the pulse width of another of the pre-set modes.

3. The stop-weighted light reference according to claim 1 or claim 2 in which one of the pre-set modes of the pulse-generator includes a full-width pulse and in which optionally other modes of the pulse generator include a one-half width pulse, a one-quarter width pulse, and a one-eighth width pulse.

4. The stop-weighted light reference according to any preceding claim in which the selector device is structured to automatically cause the pulse-generator to sequentially step through the number of pre-set modes.

5. The stop-weighted light reference according to any preceding claim in which the pulse-generator is structured to drive each mode with constant electrical current, and in which each of the pre-set modes has a different pulse width.

6. The stop-weighted light reference according to any preceding claim in which the pulse-generator includes at least 10 pre-set modes.

7. The stop-weighted light reference according to any preceding claim in which an individual one of the pre-set modes is repeated multiple times at a particular frequency and optionally the frequency is selected based on a light integration rate of a camera.

8. A camera calibration system for a camera having an Optical-Electrical Transfer Function, the calibration system comprising:

   a three-dimensional structure including an LED light located within an interior of the structure, and including a hole through which the camera may view the LED light; and

a pulse-generator having a predefined number of pre-set modes, and each mode having a pulse width different than other modes, the pulse-width generator structured to provide to the LED light a light driving output in one of the pre-set modes that corresponds to the user selected value.

9. The camera calibration system according to claim 8, further comprising: a selector device configured to be operated by a user to cause a predefined amount of light to be output by the LED, and in which the pulse-width generator is structured to accept a user-selected value from the selector device and to provide to the LED light source the light driving output.

10. The camera calibration system according to claim 8 or claim 9 in which the pulse-width of a particular pre-set mode is exactly one-half the pulse width of another of the pre-set modes.

11. A method of calibrating a camera output, the method comprising:

measuring a plurality of uncalibrated electrical outputs of the camera that respectively correspond to a plurality of known amounts of light; storing the plurality of uncalibrated electrical outputs of the camera; and from the plurality of uncalibrated electrical outputs of the camera, creating a correlation table that respectively correlates the plurality of uncalibrated electrical outputs of the camera to pre-selected calibrated outputs, the pre-selected calibrated outputs being related to one another on a $\log_2$ scale.

12. The method of calibrating a camera output according to claim 11, in which creating a correlation table comprises:

determining how many number of independent calibrated outputs will be in the correlation table; and for every of the number of independent calibrated outputs, associating a range of uncalibrated electrical output levels,

and where optionally the method further comprises storing the range of uncalibrated electrical output levels and their associated independent calibrated output in a Look-Up-Table.

13. A test and measurement apparatus, comprising:

an input structured to accept a camera output for a camera that has an uncalibrated Optical-Electrical Transfer Function;
a first converter structured to accept the camera output and generate a numerical equivalent thereof;
a second converter structured to accept one of the numerical equivalents from the first converter and to generate an output that is one of a plurality of calibrated outputs.

14. The test and measurement apparatus according to claim 13, in which the plurality of calibrated outputs comprises a set of values related to one another by a $\log_2$ function.

15. The test and measurement apparatus according to claim 13 or claim 14, in which the camera output is generated by pointing the camera at one of a known plurality of light values.

EP 3 203 734 A2

100

130

LIGHT VALUE
SELECTOR

120

LED DRIVING SIGNAL
PULSE GENERATOR

DRIVING SIGNAL

122

LED
110

**FIG. 1**

**FIG. 2**

EP 3 203 734 A2

FIG. 3

**FIG. 4**

**FIG. 5**

**FIG. 6A**

$$\text{fs\_lut}\ (\text{data}\ ,\text{grat}\ )\ := \left\| \begin{array}{l} L \longleftarrow \text{length}\ (\text{data}\ ) \\ \text{for}\quad i \in\ 0\ ..\ L\ -\ 2 \\ \quad \left\| \begin{array}{l} D \longleftarrow \text{data}_i\ -\ \text{data}_{i+1} \\ \text{for}\quad d \in\ 0\ ..\ D\ -\ 1 \\ \quad \left\| \text{fs}_{\text{data}_i - d} \longleftarrow \left(\text{grat}_{i+1}\ -\ \text{grat}_i\right) \cdot \dfrac{d}{D}\ +\ \text{grat}_i \right. \end{array} \right. \\ \text{fs}_{\left(\text{data}_{L-1}\right)} \longleftarrow \text{grat}_{L-1} \\ \text{for}\quad j \in\ 0\ ..\ \text{data}_{L-1} \\ \quad \left\| \text{fs}_j \longleftarrow \text{grat}_{L-1} \right. \\ \text{fs} \end{array} \right.$$

**FIG. 6B**

FIG. 7

800

810

MEASURE ELECTRICAL OUTPUTS
OF A CAMERA FROM A NUMBER OF
KNOWN LIGHT VALUES

820

STORE UNCALIBRATED OUTPUTS

830

CREATE A TABLE TO CORRELATE
UNCALIBRATED ELECTRICAL
OUTPUTS TO PRE-SELECTED
CALIBRATED OUTPUTS HAVING A
LOG2 SCALE

840

STORE CORRELATION TABLE INTO
LOOK UP TABLE

# FIG. 8

**REFERENCES CITED IN THE DESCRIPTION**

**Patent documents cited in the description**

- US 62291795 B
- US 15384077 B